# EUROPEAN PATENT SPECIFICATION

(11) **EP 0 787 262 B1**
(45) Date of publication and mention of the grant of the patent: **11.04.2001**
(21) Application number: 95943064.6
(22) Date of filing: 12.12.1995
(51) Int. Cl.: F16B 31/00, F16B 33/04, F16B 37/08

(54) **CLAMP SCREW**
SPANNSCHRAUBE
VIS DE SERRAGE

(30) Priority: 22.12.1994 JP 34117594; 22.12.1994 JP 34117694
(43) Date of publication of application: 06.08.1997
(73) Proprietor: POWER TOOL HOLDERS INCORPORATED, Wilmington, DE 19809 (US)
(72) Inventor: NAKAMURA, Daijiro, Hyougo Prefecture 675-13 (JP)
(74) Representative: Chettle, Adrian John
(86) International application number: US9516101
(87) International publication number: WO9619677

(56) References cited:
- US-A- 4 176 582
- US-A- 4 941 790
- US-A- 4 955 744
- US-A- 5 388 942

## Description

### Field of Industrial Use

This invention relates to a clamp screw as per the preamble of claim 1. An example of such a screw is disclosed by US 4 955 744 A.

### Prior Art

When attaching a rotating tool such as said grindstone or circular saw to the drive shaft of an electric tool, in conventional practice a flange and a male thread are formed at the end of the drive shaft, the rotating tool is inserted over this male thread, and a clamp screw formed with a female thread, for example a nut, is screwed on outside of this, this nut then being clamped using a tightening tool such as a wrench.

Since said electric tool is a manual type (portable), when using a wrench for clamping as described above, the alignment of the electric tool is unbalanced, and its work performance deteriorates. Thus if the above-mentioned clamping nut can be attached by rotation using a manual operation only, work performance will be greatly improved. Moreover, clamping using reverse thrust from the use of the rotating tool will be even more effective. However, when the nut is rotated in a manual operation, a loss in clamping force occurs due to the frictional resistance in the thread portion of said male thread and the female thread of the nut, with the difficulty that it is not possible to create a sufficient clamping force using the force of a manual operation alone. Moreover, there is the disadvantage that if the reverse thrust of the rotating tool is used without being checked, too much clamping may occur so that it cannot be removed.

### Problems To Be Resolved By The Invention

This invention has as its purpose the provision of a clamp screw in which the loss of clamping force is greatly reduced, a powerful clamping force can be obtained with a small rotational input, a sufficient clamping force can be obtained by a manual operation, and moreover, a sufficient clamping force can be obtained without excessive clamping by making effective use of the reverse thrust of the rotating tool.

### Means of Resolving the Problems

The invention provides a clamp screw which is provided with a threaded member with a threaded part having a female or male thread formed on a shaft part and which screws onto a threaded attachment part, and with a shaft-shaped peripheral part formed on its outer surface, an operating ring whose inner part is inserted over the shaft-shaped peripheral part of said threaded member and to which a rotational force is input externally, and a flange ring fitted facing said operating ring so as to freely rotate on said shaft-shaped peripheral part of said threaded member and permitted a slight movement in the axial direction, and in contact with the attached object, thread grooves of the same respective thread pitch being engraved into the inserted and engaged inner and outer surfaces of said threaded member and operating ring, a plurality of balls being fitted into said thread grooves, a restraining ring being installed between said operating ring and flange ring with slight freedom of movement in the axial direction with respect to the threaded member but prevented from rotating, and a spring means being fitted between said restraining ring and operating ring, which returns said operating ring to its initial position allowing for the set number of turns in the clamping range.

With the clamp screw of Claim 1 when the operating ring is rotated with the threaded part of the threaded member screwed onto the threaded attachment part, until the flange ring comes into contact with the object being attached it rotates in the same way as a single threaded member, as it forms a unit through the assembled resistance of the structural elements. Then when the flange ring comes in contact with the object being attached, the rotation of the threaded member stops and it enters the clamping state, the rotation of the operating ring is screw fed due to the balls moving around the thread grooves, and due to this screw feed the movement of the operating ring creates a pressure against the flange ring through the restraining ring, so that this pressure produces a clamping force on the object being attached. Moreover, the rotation of said operating ring during the screw feed of said operating ring has virtually no frictional resistance due to the movement of the balls around the thread grooves, so that the rotative force of the operating ring can be applied to the flange ring effectively with no loss.

When removing the clamp screw, by rotating the operating ring in the opposite direction to the above, the pressure from the said operating ring on the flange ring is released, and the clamping can be loosened, and thereafter it can be removed like a single threaded member. Also there is no loss of rotative power when the operating ring is turned in reverse, since the balls move around the thread grooves. Furthermore, when the load is removed from the operating ring on the flange ring side, the operating ring returns to its initial position with respect to the threaded member due to the spring means.

With the clamp screw of Claim 3 in addition there is virtually no frictional resistance between the operating ring and the restraining ring, so that the rotational force of the operating ring can be transmitted to the flange ring effectively and without loss.

With the clamp screw of Claim 4 in addition the position of the balls is maintained by the retaining ring, ensuring the balls have a smooth turning movement.

With the clamp screw of Claim 5 in addition when the operating ring enters the clamping state, the adjustment ring also receives the pressure between the operating ring and stops rotating, and due to its stopping a relative rotation takes place between the operating ring and the adjustment ring, and adjustment and an adjustment noise is generated by slippage between the raised parts and the contact part, and the clamping state can be verified by this adjustment and adjustment noise.

According to the invention of Claim 1 of the invention, when the flange ring comes into contact with an attached tool, the rotation of the threaded member stops and it enters a clamping state, the rotation of said operating ring during screw feed of the operating ring has virtually no frictional resistance due to the movement of the balls around the thread grooves, so the rotational force of the operating ring can be transmitted effectively and without loss to the flange ring, it is possible to fix the clamp strongly even with a small rotational force, and manual operation can be made to exert a sufficient clamping force.

### Brief Description of the Drawings

Figure 1 is a cross section of the clamp screw;
Figure 2 is an exploded diagram with parts above the centre line in cross section;
Figure 3 is a development with part of the retaining ring omitted;
Figure 4 is a cross section through line A-A in Figure 1; and
Figure 5 is a plan view of adjustment ring.

### Preferred Embodiments

Preferred embodiments of the invention will now be described based on the drawings.

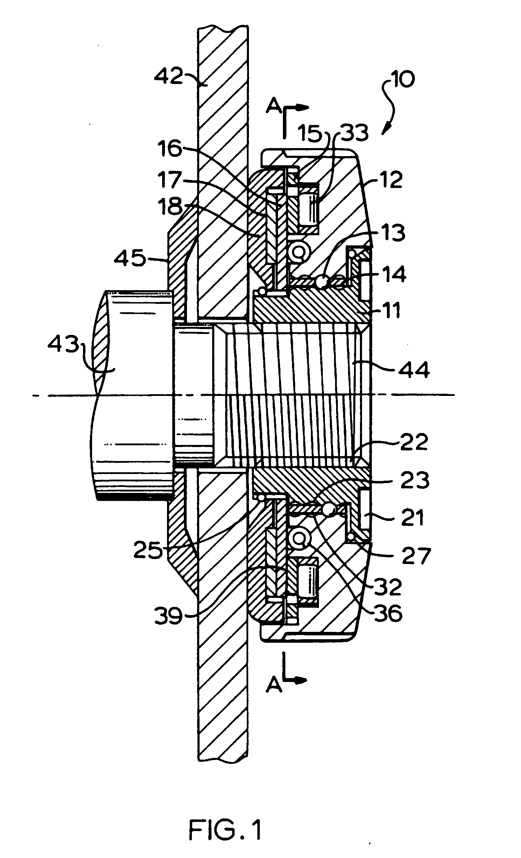

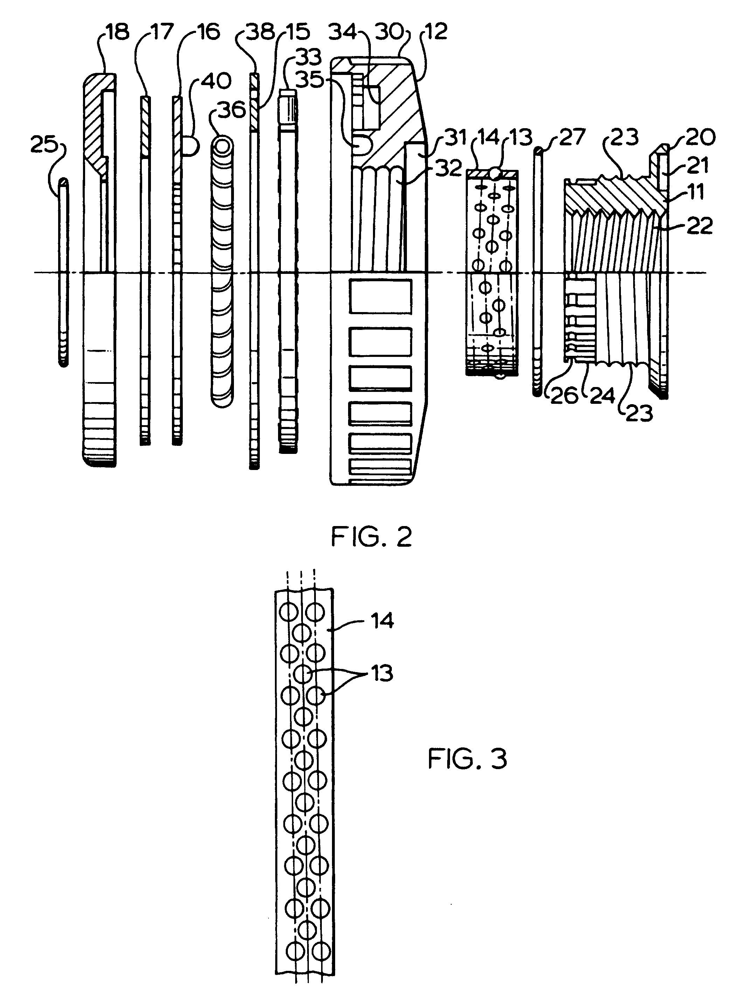

The drawings show a clamp screw 10, and in Figures 1 and 2 claim screw 10 is provided with cylindrical threaded member 11, ring-shaped operating ring 12, cylindrical retaining ring 14 which retains balls 13, disk-shaped adjustment ring 15, disk-shaped restraining ring 16, disk-shaped dry metal 17, and ring-shaped flange ring 18.

At the end of said threaded member 11 is formed a collar part 20, engagement holes 21 for a wrench being formed in the outer surface of this collar part 20 at an appropriate spacing. Female thread 22 is formed on the shaft of said threaded member 11, arc-shaped thread grooves 23 for the movement of above-mentioned balls 13 being formed in the circumference of the shaft on the inner side of said collar part 20, and furthermore on its outside surface are formed spline slots 24 which engage with the above-mentioned restraining ring 16, and ring slots 26 which stop stopping ring 25. Element 27 is an O-ring to provide a seal.

The above-mentioned operating ring 12 is a ring to which rotational force is input, and is inserted over the shaft-shaped periphery of said threaded member 11, knurl 30 being formed on its outer surface to prevent slipping, and on its outside surface is formed depression 31 into which fits collar part 20 of threaded member 11 with the above-mentioned O-ring 27 installed, and moreover on the inner surface are formed arc-shaped thread grooves 32 for said balls 13 to move around and which have the same thread pitch as said thread grooves 23, and furthermore on the inside surface is formed depression 34 which accommodates thrust bearing 33, thrust bearing 33 thus accommodated being in contact with the side of adjustment ring 15 mentioned above. Groove 35 is for accommodating spring 36 to be described later. Furthermore said thread grooves 23, 32 need not be arc-shaped but may be the conventional triangular shape.

The above-mentioned balls 13 are retained within retaining ring 14 so as to be able to rotate around with a plurality of balls spaced at the required intervals, and moreover balls 13 are arranged at a mutual distance with adjacent balls 13, 13 in the direction of the thread pitch having their positions spaced without clustering along the direction of thread pitch, and by having this structure it is arranged that the width of the thread pitch can be formed smaller than the diameter of balls 13. The lead angle of screw grooves 23, 32 is set smaller than the lead angle of female thread 22 of said threaded member 11, and moreover it is preferable that said lead angle be formed at an angle of 1.5° or less to avoid loosening caused by vibration.

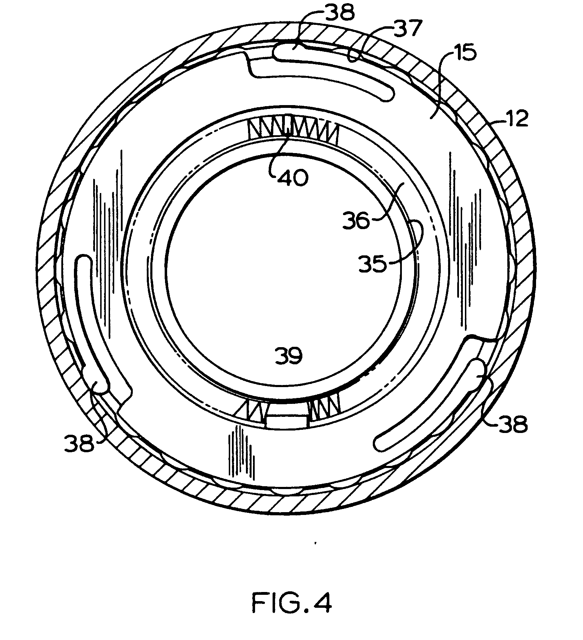

As shown in Figure 4, raised parts 37 are formed on the inner surface of the inside of the above-mentioned operating ring 12, and contact parts 38 formed in three positions on the outer surface of adjustment ring 15 are made to engage with these raised parts 37. The above-mentioned contact parts 38 have an elasticity through being formed via a long neck from said adjustment ring 15, and due to this elasticity contact parts 38 are sprung against said raised parts 37, and when these raised parts 37 and contact parts 38 rotate against one another, in addition to obtaining adjustment of the rotation of operating ring 12, an adjustment noise is generated due to the engagement of contact parts 38 in the depressions.

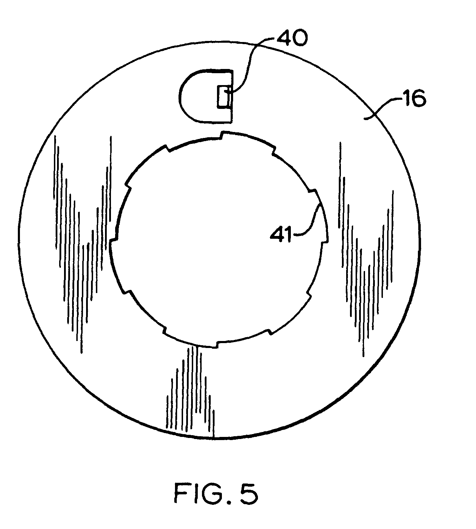

In housing groove 35 of the above-mentioned operating ring 12 is a stopper 39, this stopper 39 being restrained by both ends of spring 36 accommodated in housing groove 35. In the middle of this spring 36, as shown in Figure 5, is fitted restrainer 40 which is formed in the above-mentioned restraining ring 16, and sprung so that said operating ring 12 can be returned to its initial position when the clamping load is released from operating ring 12.

Said restraining ring 16 has spline grooves 41 formed on its inner surface, which engage with spline grooves 24 of above-mentioned threaded member 11, and even with slight movement permitted in the axial direction of said threaded member 11, is fitted to threaded member 11 so that rotation is prevented.

Disk-shaped dry metal 17 has the coefficient of friction of its surface set at the required value, the value being adjusted up to a level where the clamping of operating ring 12 due to the reaction of rotating tool 42 on thread grooves 23, 32 is not excessive, and is set so that the value ensuring slipping occurs with further rotation.

The above-mentioned flange ring 18 is fitted to rotate at the end of spline grooves 24 of threaded member 11 with a slight degree of movement permitted in the axial direction, its outside surface applying clamping pressure against rotating tool 42.

A male thread 44 for attachment is engraved in the end of drive shaft 43 of the electric tool, rotating tool 42 being fitted to this male screw 44 via an inner flange 45, and is fixed on using a clamp screw 10 of a structure as described above.

In other words female thread 22 of threaded member 11 is screwed onto male screw 44 of drive shaft 43. In a state where the flange ring 18 is not in contact with rotating tool 42, in other words where no load is applied to said flange ring 18, it is screwed on just like a single nut, rotating as a unit through the assembled resistance of the structural elements of clamp screw 10.

When flange ring 18 comes into contact with the side of rotating tool 42 and stops, the rotation of threaded member 11 also stops simultaneously, at which point a clamping state is entered. In other words if operating ring 12 is further rotated in the direction of clamping in this state, balls 13 retained in retaining ring 14 move around thread grooves 23, 32, and operating ring 12 is screw fed. Moreover, the movement of these balls 13 has virtually no frictional resistance, so the rotation of operating ring 12 can be effectively transmitted without loss of the operating force.

The screw feed of the above-mentioned operating ring 12 applies pressure through thrust bearing 33 to adjustment ring 15, restraining ring 16 and dry metal 17, and furthermore exerts pressure on flange ring 18 so that rotating tool 42 is firmly clamped.

When the above-mentioned operating ring 12 enters a clamping state, since restraining ring 16 does not rotate, when operating ring 12 rotates spring 36 is compressed in the direction of clamping.

When operating ring 12 is clamped in the above-described fashion, it is possible to set the angle of rotation to approximately 90° with a movement of the operating ring 12 that is within as little as 0.5 mm in the axial direction. Furthermore as the rotation of operating ring 12 is transmitted effectively and without loss of operating power, a strong fixed clamping can be obtained from a small rotational force (operating force) and sufficient clamping can be obtained from manual operation.

Moreover there is virtually no friction with adjustment ring 15 with respect to the rotation of operating ring 12 due to thrust bearing 33 being fitted, so there is no loss of this part of the force and it can make the rotation of the operating ring more effective.

As described above, when operating ring 12 is rotated in the clamping state, at this point adjustment ring 15 comes under pressure and stops, so that a relative movement against operating ring 12 occurs, with raised parts 37 on the inside surface of operating ring 12 riding over contact parts 38 of adjustment ring 15 and rotating, an adjustment and an adjustment noise being obtained from operating ring 12 each time they ride over, and as a result of this contact the operator is able to confirm that a clamping state has been achieved.

When rotating tool 42 has been fixed as described above and this rotating tool 42 is used, the reverse thrust caused by the resistance in use is transmitted to flange ring 18, and this is rotated in the direction of clamping. This reverse rotation is transmitted to said dry metal 17 and restraining ring 16 through adjustment ring 15 until dry metal 17 slips, and a relative rotation in the direction of clamping occurs between this adjustment ring 15 and operating ring 12, the mutual clamping force is increased, and due to this increased clamping force (extra clamping) a more effective clamping can be obtained. However, where a reverse rotation greater than the coefficient of friction set for dry metal 17 occurs, slipping will occur between this dry metal 17 and flange ring 18, so that over-clamping can be prevented.

When removing clamp screw 10 attached as described above, operating ring 12 is rotated in the direction of loosening. Whilst the flange ring 18 is in contact with rotating tool 42, this rotation also causes screw feed of operating ring 12 due to balls 13 and thread grooves 23, 32. Moreover, due to the fact that there is virtually no frictional resistance due to the rotation of the balls 13, this screw feed is effectively transmitted with a small manual rotational force so that clamping and loosening are possible.

Moreover, when the clamping of flange ring 18 is released, clamp screw 10 rotates as a unit due to the assembled resistance of the structural elements, the rotation of operating ring 12 becomes the rotation of threaded member 11, and female thread 22 of said threaded member 11 can be removed from male thread 44 of drive shaft 43.

Furthermore, when the clamping load is released from operating ring 12, the elastic force of compressed spring 36 returns operating ring 12 to its initial waiting position with respect to restraining ring 16.

In the embodiment described above, when flange ring 18 comes into contact with rotating tool 42, the rotation of threaded member 11 stops and it enters a clamping state, the rotation of said operating ring 12 during screw feed of operating ring 12 has virtually no frictional resistance due to the movement of balls 13 around thread grooves 23, 32, so the rotational force of operating ring 12 can be transmitted effectively and without loss to flange ring 18, it is possible to fix the clamp strongly even with a small rotational force, and manual operation can be made to exert a sufficient clamping force.

Moreover, as dry metal 17 is fitted, a more effective clamping is obtained due to the increased clamping force (extra clamping) resulting from the reverse rotation of rotating tool 42.

In addition, when the reverse rotation is greater than the level at which the coefficient of friction of dry metal 17 has been set, slippage occurs between this dry metal 17 and the flange ring 18, thus preventing over-clamping.

Moreover, since there is virtually no frictional resistance between operating ring 12 and restraining ring 16 during the above-mentioned clamping state because of thrust bearing 33, there is no loss of rotational force in said part, and a small operating force such as a hand movement can be made more efficiently and effectively to have sufficient effect as a clamping force.

Furthermore, since the spacing of balls 13 in retaining ring 14 is arranged at a mutual distance with adjacent balls 13 in thread grooves 23, 32 in the direction of the thread pitch having their positions spaced along the direction of thread pitch, it is possible to have the thread pitch of thread grooves 23, 32 smaller than the diameter of balls 13, the lead angle of thread grooves 23, 32 can be small, and as a result a greater multiplication of the operating force is obtained, and effective clamping is obtained.

Moreover, when operating ring 12 enters the clamping state, raised parts 37 and contact parts 38 slip against each other due to the relative rotation between operating ring 12 and adjustment ring 15, generating an adjustment and an adjustment noise, and it is possible to verify the clamping state by this adjustment and adjustment noise.

### Key

10 - clamp screw
11 - threaded member
12 - operating ring
13 - ball
14 - retaining ring
15 - adjustment ring
16 - restraining ring
17 - dry metal
18 - flange ring
23, 32 - thread grooves
33 - thrust bearing
36 - spring
37 - raised parts
38 - contact parts
40 - restrainer

With respect to the correspondence of the structure of this invention with the embodiment described above, even where the spring means of the invention corresponds to restrainer 40 and spring 36 of the restraining ring 16 of the embodiment, the structure of the invention is not limited only to the structure of the above embodiment. For example, female thread 22 of threaded member 11 may be replaced with a male thread.

## Claims

1. A clamp screw (10) which is provided with a threaded member (11) with a threaded part having a female or male thread (22) formed on a shaft part and which screws onto a threaded attachment part, and with a shaft-shaped peripheral part formed on its outer surface, an operating ring (12) whose inner part is inserted over the shaft-shaped peripheral part of said threaded member (11), and to which a rotational force is input externally, and a flange ring (18) fitted facing said operating ring (12) so as to freely rotate on said shaft-shaped peripheral part of said threaded member (11) and permitted a slight movement in the axial direction, and in contact with the attached object characterized by, thread grooves (23) of the same respective thread pitch being engraved into the inserted and engaged inner and outer surfaces of said threaded member (11) and operating ring (12), a plurality of balls (13) being fitted into said thread grooves (23), a restraining ring (16) being installed between said operating ring (12) and flange ring (18) with slight freedom of movement in the axial direction with respect to the threaded member (11) but prevented from rotating, a spring means (36) being fitted between said restraining ring (16) and operating ring (12), which returns said operating ring (12) to its initial position allowing for the set number of turns in the clamping range.

2. A clamp screw as claimed in claim 1 and in which a dry metal (17) is fitted between said restraining ring (16) and flange ring (18) in contact with both of these and applying the required frictional resistance.

3. A clamp screw as claimed in Claim 1 or Claim 2 and in which a thrust bearing (33) is fitted between said operating ring (12) and restraining ring (16).

4. A clamp screw as claimed in any preceding claim and in which said balls (13), in addition to being retained by a retaining ring (16) fitted between the respective thread grooves (23) of the threaded member (11) and the operating ring (12), are arranged at a mutual distance with adjacent balls (13) in the direction of the thread pitch having their positions spaced along the direction of thread pitch.

5. A clamp screw as claimed in Claim 1 or Claim 2 and in which a thrust bearing (33) is fitted between said operating ring (12) and restraining ring (16), an adjustment ring (15) is fitted between said thrust bearing (33) and restraining ring (16), raised parts (37) being formed on one of the circumferences of the respectively opposing surfaces of said adjustment ring (15) and operating ring (12), contact parts (38) which are able to slip and are sprung against said raised parts (37) being formed on the other.

## Patentansprüche

1. Klemmschraube (10), welche mit einem Gewindeelement (11) mit einem Gewindeabschnitt, welcher ein an einem Schaftabschnitt ausgebildetes weibliches bzw. männliches Gewinde (22) aufweist und welcher auf einen Gewinde-Befestigungsabschnitt geschraubt wird, und mit einem an der äußeren Fläche davon ausgebildeten schaftförmigen Umfangsabschnitt, einem Betätigungsring (12), dessen innerer Abschnitt über den schaftförmigen Umfangsabschnitt des Gewindeelements (11) geführt wird und auf welchen eine Drehkraft von außen ausgeübt wird, und einem Flanschring (18), welcher gegenüber dem Betätigungsring (12) derart angebracht ist, daß dieser sich auf dem schaftförmigen Umfangsabschnitt des Gewindeelements (11) frei dreht und eine geringfügige Bewegung in der Axialrichtung ermöglicht wird, und sich in Berührung mit dem befestigten Gegenstand befindet, versehen ist, gekennzeichnet durch daß Gewinderillen (23), welche mit der gleichen jeweiligen Gewindesteigung in die eingeführten und ineinandergreifenden inneren und äußeren Flächen des Gewindeelements (11) und des Betätigungsrings (12) geschnitten sind, eine Vielzahl von Kugeln (13), welche in die Gewinderillen (23) eingesetzt sind, einen Haltering (16), welcher zwischen dem Betätigungsring (12) und einem Flanschring (18) mit geringfügiger Bewegungsfreiheit in der Axialrichtung gegenüber dem Gewindeelement (11) eingebaut ist, wobei jedoch verhindert wird, daß sich dieser dreht, und eine Federeinrichtung (36), welche zwischen dem Haltering (16) und dem Betätigungsring (12) angebracht ist, welche den Betätigungsring (12) zu dessen Anfangsposition zurückführt, wobei die festgelegte Anzahl von Drehungen in dem Klemmbereich berücksichtigt wird.

2. Klemmschraube nach Anspruch 1, wobei ein trockenes Metall (17) zwischen dem Haltering (16) und dem Flanschring (18) in Berührung mit beiden von diesen angebracht ist und den erforderlichen Reibungswiderstand ausübt.

3. Klemmschraube nach Anspruch 1 oder Anspruch 2, wobei ein Drucklager (33) zwischen dem Betätigungsring (12) und dem Haltering (16) angebracht ist.

4. Klemmschraube nach einem beliebigen vorangehenden Anspruch, wobei die Kugeln (13) zusätzlich dazu, daß diese durch einen Haltering (16) in Einpassung zwischen den jeweiligen Gewinderillen (23) des Gewindeelements (11) und des Betätigungsrings (12) gehalten werden, in einem wechselseitigen Abstand angeordnet sind, wobei sich die Positionen in der Richtung der Gewindesteigung benachbarter Kugeln (13) in Abstand entlang der Richtung der Gewindesteigung befinden.

5. Klemmschraube nach Anspruch 1 oder Anspruch 2, wobei ein Drucklager (33) zwischen dem Betätigungsring (12) und dem Haltering (16) angebracht ist, ein Einstellring (15) zwischen dem Drucklager (33) und dem Haltering (16) angebracht ist, erhöhte Abschnitte (37) an einer der Umfangslinien der jeweilig gegenüberliegenden Flächen des Einstellrings (15) und des Betätigungsrings (12) ausgebildet sind und Berührungsabschnitte (38), welche gleiten können und gegen die erhöhten Abschnitte (37), welche an der anderen ausgebildet sind, gedrängt werden.

## Revendications

1. Vis de serrage (10) comportant :
. un élément de vissage (11) pourvu d'une partie filetée présentant un filetage (22) mâle ou femelle conformé sur une partie de tige et qui se visse sur un raccord fileté, et une partie périphérique en forme de tige conformée sur sa face externe,
. une bague de manoeuvre (12) dont la partie interne est insérée par-dessus la partie périphérique en forme de tige de l'élément fileté (11), et sur laquelle une force de rotation est exercée depuis l'extérieur, et
. une bride (18) ajustée en regard de la bague de manoeuvre (12) de façon à tourner librement sur la partie périphérique en forme de tige de l'élément de vissage (11) et à pouvoir se déplacer légèrement dans la direction axiale, et en contact avec l'objet fixé,
caractérisée en ce que des rainures filetées (23) présentant un même pas de vis respectif sont gravées dans les surfaces externe et interne en prise réciproque de l'élément de vissage (11) et de la bague de manoeuvre (12), en ce qu'une pluralité de billes (13) sont placées dans les rainures filetées (23), en ce qu'une bague de maintien (16) est logée entre la bague de manoeuvre (12) et la bride (18) avec une légère liberté de mouvement dans la direction axiale par rapport à l'élément de vissage (11) mais sans possibilité de rotation, et en ce qu'un moyen de ressort (36) est ajusté entre la bague de maintien (16) et la bague de manoeuvre (12), afin de faire revenir la bague de manoeuvre (12) dans sa position initiale permettant d'effectuer le nombre de tours imposés dans la gamme de serrage.

2. Vis de serrage selon la revendication 1, caractérisée en ce qu'un métal sec (17) est placé entre la bague de maintien (16) et la bride (18) en contact avec ceux-ci et en ce qu'il exerce la résistance de friction requise.

3. Vis de serrage selon la revendication 1 ou 2, caractérisée en ce qu'un palier de butée (33) est ajusté entre la bague de manoeuvre (12) et la bague de maintien (16).

4. Vis de serrage selon l'une quelconque des revendications précédentes, caractérisée en ce que les billes (13), en plus d'être maintenues par une bague de maintien (16) ajustée entre les rainures filetées (23) respectives de l'élément de vissage (11) et la bague de manoeuvre (12), sont agencées à une distance mutuelle avec les billes (13) adjacentes dans la direction du pas de vis selon des positions espacées le long de la direction du pas de vis.

5. Vis de serrage selon la revendication 1 ou 2, caractérisée en ce qu'un palier de butée (33) est ajusté entre la bague de manoeuvre (12) et la bague de maintien (16), en ce qu'une bague d'ajustement (15) est placée entre le palier de butée (33) et la bague de maintien (16), en ce que des parties saillantes (37) sont conformées sur l'une des circonférences des surfaces respectivement opposées de la bague d'ajustement (15) et de la bague de manoeuvre (12), et en ce que des éléments de contact (38) susceptibles de coulisser et forcés élastiquement contre les parties saillantes (37) sont conformés sur l'autre circonférence.
